(19) Europäisches Patentamt / European Patent Office / Office européen des brevets

(11) **EP 4 078 112 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **20842185.9**

(22) Anmeldetag: **18.12.2020**

(51) Internationale Patentklassifikation (IPC):
**G01G 21/26** *(2006.01)*      **G01G 21/22** *(2006.01)*

(52) Gemeinsame Patentklassifikation (CPC):
**G01G 21/26; G01G 21/22**

(86) Internationale Anmeldenummer:
**PCT/DE2020/101079**

(87) Internationale Veröffentlichungsnummer:
**WO 2021/121486 (24.06.2021 Gazette 2021/25)**

(54) **PRÜFKÖRPERSYSTEM**

SYSTEM OF TEST PIECES

DISPOSITIF DE SPÉCIMÈNES DE TESTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019   DE 102019135601**

(43) Veröffentlichungstag der Anmeldung:
**26.10.2022   Patentblatt 2022/43**

(73) Patentinhaber: **WIPOTEC GmbH**
**67657 Kaiserslautern (DE)**

(72) Erfinder:
• **GOTTFRIEDSEN, Jan**
**67714 Waldfischbach-Burgalben (DE)**

• **STELLWAGEN, Tobias**
**67659 Kaiserslautern (DE)**

(74) Vertreter: **Mischung, Ralf**
**Eder Schieschke & Partner mbB**
**Patentanwälte**
**Elisabethstraße 34/II**
**80796 München (DE)**

(56) Entgegenhaltungen:
**DE-A1- 19 631 709     DE-U1-202008 012 406**
**GB-A- 780 321**

**Beschreibung**

Die vorliegende Erfindung betrifft ein Prüfkörpersystem zur Überprüfung von Messsystemen sowie ein Verfahren für eine solche Überprüfung.

Industrielle Messsysteme und Inspektionssysteme, insbesondere Waagen, müssen beispielsweise bei einer Bauartzulassung, einer Eichprüfung, einer Kalibrierung oder sonstigen Überprüfungen auf ihre ordnungsgemäße Funktion, insbesondere die auf Messrichtigkeit und Messbeständigkeit, überprüft werden. Dies geschieht vorzugsweise mittels geeigneter Prüfkörper, welche bestimmte, vom Messsystem zu bestimmende physikalische Eigenschaften aufweisen. Bei Waagen kann dies beispielsweise ein bestimmtes Gewicht oder eine bestimmte Gewichtsverteilung entlang einer bestimmten Länge oder Breite eines Körpers sein.

Dynamisch arbeitende Messsysteme sind dazu ausgelegt, Produkte zu bewegen (etwa mittels einer Fördereinrichtung wie beispielsweise einem Förderband), und während der Bewegung bestimmte physikalische Eigenschaften der Produkte zu erfassen. Um solche Systeme testen zu können müssen daher geeignete Prüfkörper mit vorbekannten Eigenschaften durch das Messsystem hindurch bewegt werden.

Je nach Messbereich des Messsystems bzw. der Größenordnung der zu erfassenden physikalischen Einheiten (insbesondere eines Gewichts oder einer Gewichtsverteilung) ist es dabei erforderlich, einen Prüfkörper mit genau den zu erfassenden Eigenschaften (insbesondere einer bestimmten Prüflast) vorab bereitzustellen. Zur ordnungsgemäßen Überprüfung einer dynamischen Waage wird beispielsweise ein Prüfkörper benötigt, der (vorzugsweise mit einer bestimmten Länge und/oder Breite) ein bestimmtes Gewicht oder eine bestimmte Gewichtsverteilung entlang dieser Länge oder Breite aufweist.

Darüber hinaus müssen große Prüfkörper mit einer möglichst ebenen und verschleißarmen Unterseite ausgestattet sein, was mit hohen Kosten verbunden ist.

Schließlich muss der Prüfkörper möglichst unveränderbar sein, um reproduzierbare Prüfungsergebnisse liefern zu können.

Die Dokumente DE 202008012406 U1, GB 780321 A und DE 19631709 A1 offenbaren Prüfkörpersysteme.

Aufgabe der Erfindung ist es daher, ein System zur Erstellung von Prüfkörpern und ein Verfahren zur Überprüfung eines Messsystems mithilfe solcher Prüfkörper anzubieten. Die Aufgabe wird gelöst durch ein Prüfkörpersystem nach Anspruch 1 bzw. ein Verfahren nach Anspruch 14.

Die Erfindung geht von der Erkenntnis aus, geeignete Prüfkörper zur Überprüfung von Messsystemen mithilfe eines Prüfkörpersystems erstellen zu können, welches aus einzelnen Elementen gebildet wird. Ein solches erfindungsgemäßes Prüfkörpersystem umfasst dabei wenigstens zwei unmittelbar miteinander koppelbare Elemente. Die Elemente sind in einer Längsrichtung X hintereinander und/oder in einer zur Längsrichtung X rechtwinkligen, vorzugsweise horizontalen Querrichtung Y nebeneinander anordenbar und miteinander koppelbar, um einen die wenigstens zwei Elemente umfassenden Zug auszubilden, der den für die Überprüfung des Messsystems zu verwendenden Prüfkörper darstellt. Der aus wenigstens zwei Elementen gebildete Zug kann dann eine vorgebbare Gesamtprüflast, eine vorgebbare X-Länge, eine vorgebbaren Y-Breite oder eine andere physikalische Größe ausbilden, die von dem Messsystem genau erfasst werden soll. Der Zug wird dazu über eine Oberfläche des Messsystems geführt, bei der es sich beispielsweise um eine ortsfeste Wägeplattform oder um ein Wägeband handeln kann.

Die erfindungsgemäß einzeln vorgesehenen Elemente des Prüfkörpersystems lassen sich flexibel und modular zusammensetzen bzw. miteinander koppeln. Anstelle für jede gewünschte Prüflast einen eigenen Prüfkörper bereitzustellen, vereinfacht das erfindungsgemäße System die Bereitstellung einer aus verschiedenen Elementen gemeinsam zusammenstellbaren Gesamtprüflast . Auch Lagerhaltungs- und Transportkosten werden dadurch signifikant reduziert.

Die Ausbildung einer verschleißfesten, ebenen Grundfläche einzelner Elemente zur Auflage auf der Oberfläche im Messsystem ist ebenfalls kostengünstiger und einfacher zu realisieren als für einen durchgehend starren Prüfkörper (der in der Praxis über 1 m lang sein kann).

Wenigstens eines der Elemente des Prüfkörpersystems ist ein Aufnahmeelement, welches zur Aufnahme einzelner Prüfgewichte ausgebildet ist. Durch Einsetzen der einzelnen Prüfgewichte in Taschen, die im Aufnahmeelement vorgesehen sind, lässt sich ein vorgebbares Sollgewicht und eine vorgebbare Gewichtsverteilung (zunächst innerhalb des einzelnen Aufnahmeelements) erstellen.

Ein erfindungsgemäßes Aufnahmeelement erstreckt sich mit einer Länge $L_A$ in Längsrichtung X, mit einer Breite $B_A$ in Querrichtung Y und mit einer Höhe Ha, in einer zur Längsrichtung X und zur Querrichtung Y orthogonal verlaufenden Höhenrichtung Z. Es weist außerdem eine Grundfläche F zur Auflage auf der Oberfläche des Messsystems auf.

Ein weiteres der wenigstens zwei Elemente des erfindungsgemäßen Prüfkörpersystems kann ein weiteres Aufnahmeelement der vorgenannten Art sein. Dessen Dimensionsabmessungen können sich allerdings von dem anderen Aufnahmeelement teilweise oder vollständig unterscheiden, sodass beispielsweise die Breite übereinstimmt, die Länge jedoch verschieden ist. Alternativ kann das zweite Element jedoch auch ein Distanzelement sein, welches nicht zur Aufnahme von Prüfgewichten vorgesehen ist, sondern vorwiegend einen Teil der Länge oder Breite des aus den Elementen gebildeten Zugs ohne signifikanten eigenen Gewichtsanteil bilden soll. Ein Distanzelement erstreckt sich mit einer Länge

$L_D$ in Längsrichtung X, mit einer Breite $B_D$ in Querrichtung Y und mit einer Höhe $H_D$ in Höhenrichtung Z.

Die Aufnahmeelemente und Distanzelemente (allgemein: Elemente) des Prüfkörpersystems sind zur Bildung eines Zugs in Längsrichtung und/oder in Querrichtung miteinander koppelbar, wobei ein Aufnahmeelement mit einem unmittelbar daran angrenzenden weiteren Aufnahmeelement oder einem Distanzelement koppelbar ist. Ebenso ist ein Distanzelement mit einem weiteren Distanzelement oder einem Aufnahmeelement koppelbar. Sofern das Prüfkörpersystem auch Kopplungen in Querrichtung vorsieht, sind Kopplungen in Längsrichtung erfindungsgemäß unabhängig von Kopplungen in Querrichtung, so dass ein Element in Längsrichtung und in Querrichtung mit verschiedenen oder gleichartigen weiteren Elementen koppelbar ist. Erfindungsgemäß lassen sich Aufnahmeelemente und/oder Distanzelemente des Prüfkörpersystems in beliebiger Reihenfolge, Anzahl, Länge und Breite modular zu einem Zug zusammensetzen, der durch geeignete Bestückung der Aufnahmeelemente des Zugs mit Prüfgewichten eine vorgebbare Gesamtprüflast und/oder Gewichtsverteilung entlang seiner Länge und Breite aufweist. Natürlich lässt sich auch für jedes einzelne Element des Zugs eine bestimmte Prüflast und Gewichtsverteilung einstellen.

Die Elemente des Prüfkörpersystems weisen geeignete Koppelmittel auf, um zueinander in Längsrichtung oder Querrichtung benachbart anzuordnende Elemente miteinander zu koppeln. Die Kopplung sollte lösbar sein, um verschiedene Anordnungen von miteinander gekoppelten Elementen ausbilden zu können. Vorzugsweise sind die Kopplungen werkzeuglos bzw. manuell lösbar.

Jedes Aufnahmeelement des Prüfkörpersystems umfasst einen Grundkörper mit einer zur Auflage auf dem Messsystem ausgebildeten, vorzugsweise ebenen Grundfläche und mit einer oder mehreren Taschen. Die Grundfläche kann durchgehend ausgebildet sein oder Ausnehmungen aufweisen, die beispielsweise durch die Taschen entstehen. Die Taschen sind zur temporären Aufnahme einzelner Prüfgewichte ausgebildet und können unterschiedliche Formen haben. Bevorzugt sind die Taschen zylinderförmig ausgebildet, um zylinderförmige Prüfgewichte mit ähnlichen Abmessungen aufzunehmen. Vorzugsweise sind die Abmessungen der Taschen an gegebenenfalls bestehende genormte Größen von Prüfgewichten möglichst passgenau angepasst, um die Prüfgewichte während der Bewegung des Zugs durch das Messsystem sicher und weitgehend spielfrei zu halten.

Erfindugsgemäß erstrecken sich die Taschen ausgehend von einer der Grundfläche gegenüberliegenden Oberseite O in Höhenrichtung Z in den Grundkörper hinein wobei die Oberseite vorzugsweise parallel zur Grundfläche auf der Unterseite des Grundkörpers ausgebildet ist. Sie können unterschiedlich tief ausgebildet sein, um die Anordnung der Prüfgewichte in unterschiedlichen Höhen zu ermöglichen. Dazu weisen die Taschen in einer vorgebbaren Tiefe geeignete Anschlagmittel auf, um ein in die Tasche eingesetztes Prüfgewicht zu halten. Dabei kann es sich um einen geschlossenen Boden handeln, so dass die Tasche nach Art eines Sackloches ausgebildet ist. Alternativ kann eine Tasche den Grundkörper auch vollständig durchdringen und dabei eine Stufe oder einen Steg aufweisen, um die Höhenposition eines eingesetzten Prüfgewichts festzulegen. Anders als ein Sackloch lässt sich eine durchgehende Öffnung des Grundkörpers leichter reinigen, und die Ansammlung von Verunreinigungen im Taschengrund wird außerdem vermieden.

Eine Tasche kann (vorzugsweise manuell und werkzeuglos betätigbare) mit einem eingesetzten Prüfgewicht zusammenwirkende Arretiermittel aufweisen, um das ungewollte Herausfallen des Prüfgewichts aus der Tasche zu vermeiden. Eine Tasche kann verschiedene geometrische Querschnittsformen aufweisen, wobei neben bevorzugt zylinderförmigen Taschen auch rechteckige oder quadratische Taschen infrage kommen, um entsprechend ausgebildete Gewichte gut aufnehmen zu können.

Die Elemente des Prüfkörpersystems sind bevorzugt aus metallischem Material oder aus Kunststoff gefertigt. Auch Verbundmaterial, bevorzugt mit geringem Gewicht, kommt in Frage. Die Elemente können beispielsweise gefräst, im Spritzguss oder im 3-D Druckverfahren hergestellt sein.

Ein erfindungsgemäßes Distanzelement weist einen Distanzelementkörper mit einer Grundfläche zur Auflage auf der Oberfläche des Messsystems auf. Das Distanzelement ist diesbezüglich vergleichbar mit einem Aufnahmeelement. Dieser ist zur Gewichtsreduzierung vorzugsweise nach Art einer Wabe oder eines Stabwerks ausgebildet. Dabei kann der Distanzelementkörper mit wenigstens einer Aussparung versehen sein, die den Körper in Höhenrichtung Z teilweise oder vollständig durchdringt. Während die Aufnahmeelemente erfindungsgemäß die Funktion übernehmen, gleiche oder unterschiedliche Gewichtsstücke an bestimmten Positionen innerhalb des Aufnahmeelements aufzunehmen, dienen die Distanzelemente dazu, zwischen einzelnen Elementen, insbesondere zwischen zwei Aufnahmeelementen, einen vorgebbaren Abstand zu erzeugen und weitgehend beizubehalten.

Um die einzelnen Elemente des Prüfkörpersystems miteinander koppeln zu können sind Koppelmittel vorgesehen. Der Begriff "Koppelmittel" soll dabei alle zur Kopplung von zwei Elementen erforderlichen Komponenten oder Anschlussbereiche an den einzelnen Elementen umfassen. Vorzugsweise umfassen die Koppelmittel einen elastischen Abschnitt, an den beidseitig Verbindungsmittel anschließen, die ihrerseits mit jeweils einem Anschlussbereich eines Elements verbindbar sind. Als Verbindungsmittel kommt beispielsweise ein Abschnitt eines Gewindes in Frage, welches durch eine Öffnung an einer Seite eines Elements hindurchsteckbar ist, um auf der anderen Seite der Öffnung mit einer Mutter gegen das jeweilige Element verschraubt zu werden. Alternativ denkbar sind stegförmige Verbindungsmittel mit einer (beispielsweise pilzförmigen) Hinterschneidung. Die bevorzugt fluchtend hintereinander angeordneten Stege (mit dazwischen liegendem elastischem Abschnitt) lassen sich von oben jeweils in eine nach oben offene Nut am Rand eines der beiden Elemente "einklipsen" oder einhängen, wobei die Hinterschneidung die die Nut bildende Wandung hintergreift. Eine damit vorgenommene Kopplung ist besonders leicht herzustellen und zu lösen. Der elastische Abschnitt kann auch als eine zwischen den gekoppelten Elemente angeordnete, bevorzugt flanschartige, Erweiterung ausgebildet sein, der die jeweilige Außenseite jedes Elements beaufschlagt und so die beiden Elemente auf Abstand hält. Das elastische Element kann ferner auch durch den Steg selber gebildet und/oder durch ein Elastomer gebildet sein oder ein solches umfassen.

Zweckmäßigerweise sind die Koppelmittel zur Kopplung von Aufnahmeelementen untereinander gleich ausgebildet zu jenen, mit denen Distanzelemente untereinander oder mit einem jeweils anderen Element verbunden werden. Außerdem können die an den einzelnen Elementen ausgebildeten Komponenten der Koppelmittel (wie beispielsweise eine Nut oder Bohrung) beim Aufnahmeelement und beim Distanzelement jeweils an identischen Positionen vorgesehen sein, zum Beispiel mittig zu einer Längs- oder Querseite, oder beidseitig symmetrisch dazu beanstandet.

Die einzelnen Elemente des Prüfkörpersystems sind dazu ausgebildet, zu einer länglichen oder flächigen Anordnung geringer Höhe zusammengesetzt zu werden. Die Ausdehnung in Höhenrichtung der einzelnen Elemente ist daher nach einer vorteilhaften Ausführungsform der Erfindung nicht größer als deren Ausdehnung in Längsrichtung X oder in Querrichtung Y. Vorzugsweise ist die Länge eines Elements wenigstens dreimal so groß wie dessen Höhe, höchst vorzugsweise ist sie mehr als fünfmal so groß. Die einzelnen Elemente und ein daraus zu bildender Zug ist bevorzugt relativ flach, um insbesondere Auftriebseffekte zu vermeiden und den Schwerpunkt niedrig zu halten.

Vorzugsweise ist die Höhe der Aufnahmeelemente identisch zur Höhe der Distanzelemente. Vorzugsweise ist weiterhin die Breite der Aufnahmeelemente identisch zur Breite der Distanzelemente. In Längsrichtung hintereinander liegende Elemente bilden dann einen Zug konstanter Breite und konstanter Höhe, was die Handhabung für die Prüfung des Messsystems erleichtert. Denkbar ist allerdings auch, die Länge und/oder Breite eines Aufnahmeelements kleiner oder größer zu wählen als diejenige eines Distanzelements, um speziellen Anforderungen an das jeweilige Messsystem oder Messverfahren gerecht zu werden.

Vorzugsweise weist ein Element des erfindungsgemäßen Prüfkörpersystems in einem Querschnitt senkrecht zur Höhenrichtung Z die Form eines regelmäßigen oder unregelmäßigen Vielecks mit einer Breite ($B_A$, $B_D$) und einer Länge ($L_A$, $L_D$) auf. Wenigstens eine Seite (Stirnseite) eines solchen Vielecks dient dabei als "Koppelseite", an welcher ein weiteres Element ankoppelbar ist. Alternativ oder ergänzend kann ein Element auch einen gerundeten Abschnitt aufweisen, der sich über die Breite ($B_A$, $B_D$) des jeweiligen Elements erstreckt. Insbesondere ein die Spitze oder den Schluss eines Zugs bildendes Element kann vorteilhaft eine solche gerundete Front aufweisen, um mögliche Vibrationen oder Schläge beim Übergang zwischen Rollen oder Auflageflächen entlang des Förderwegs im Messsystem zu reduzieren. Der gerundete Abschnitt kann dabei die Form eines Klöpperbodens oder eines Kreisbogens, insbesondere eines Viertelkreises oder eine Halbkreises, aufweisen. Denkbar ist es ferner, mehrere Elemente zu einem Vollkreis zusammenzusetzen. Elemente können auch an einem gerundeten Abschnitt Koppelmittel aufweisen, um eine Kopplung mit einem geraden oder ebenfalls gerundeten Abschnitt eines weiteren Elements zu ermöglichen.

Nach einem Aspekt der Verbindung sind die jeweils zwei Elemente miteinander koppelnden Koppelmittel (K) vorzugsweise dazu ausgebildet, Zug- und/oder Schub- und/oder Druckkräfte zwischen den zwei Elementen zu übertragen, wobei die Koppelmittel elastisch sind, um unter Beibehaltung der Kopplung

    a) ein biegeschlaffes Verkippen der miteinander gekoppelten Elemente relativ zueinander innerhalb vorgebbarer Toleranzen zuzulassen, insbesondere um eine in Längsrichtung X oder Querrichtung Y oder Höhenrichtung Z verlaufende Kippachse, und/oder

    b) eine translatorische Bewegung der zwei Elemente relativ zueinander zuzulassen, und/oder

    c) die Übertragung von Stößen zwischen den zwei Elementen zu dämpfen und/oder zu federn.

Überraschend hat sich gezeigt, dass durch die elastische Ausbildung der Koppelmittel einerseits eine sichere und stabile Zug- und/oder Schub- und/oder Druckverbindung einzelner Elemente miteinander möglich ist, während zugleich eine für die Überprüfung des Messsystems nötige relative Beweglichkeit der einzelnen Elemente zueinander in ausreichendem Maße sichergestellt werden kann. Durch die flexible Kopplung der Elemente miteinander erlangt der einen Prüfkörper bildende Zug die nötige Flexibilität, um sich entlang des Förderwegs durch das Messsystem bestmöglich an die jeweils tragende Auflagefläche anzupassen und beispielsweise einen oder mehrere hintereinander liegende Wägeplattformen wirklichkeitsgetreu zu belasten. Hingegen würde ein über seine gesamte Länge starrer bzw. durchgehender Prüfkörper auf einer vollständig eben ausgebildeten Oberfläche im Messsystem möglicherweise nur mit seinen Enden oder einem Zwischenbereich aufliegen und so das Messergebnis verfälschen.

Die elastische Ausbildung der Koppelmittel gestattet neben einem Verkippen zueinander benachbarter Elemente vorzugsweise auch einen gewissen Höhenversatz (translatorische Verschiebung) der miteinander gekoppelten Elemente, beispielsweise beim Übergang von einem Förderband auf ein geringfügig höher oder niedriger anschließendes weiteres Förderband. Auch eine Kurvenfahrt (zum Beispiel in einem klimatisierten Testlabor), bei der benachbarte Elemente um eine gedachte, in Höhenrichtung Z verlaufende Kippachse zueinander gekippt werden, ist mithilfe der elastisch ausgebildeten Koppelmittel möglich.

Stöße, Schläge oder Vibrationen, die von einem Element auf ein angrenzendes weiteres Element durch eine starre Kopplung übertragen werden könnten, werden durch die elastische Eigenschaft der Koppelmittel vorteilhaft vermindert oder vollständig gedämpft.

Um eine Relativbewegung zwischen den Elementen zuzulassen ist nach einer weiteren vorteilhaften Ausführungsform vorgesehen, dass zwei unmittelbar miteinander gekoppelte Elemente zwischen sich einen nur durch die Koppelmittel unterbrochenen Abstand, insbesondere einen Spalt, bilden, um eine direkte Kontaktierung der zwei Elemente auch bei deren Relativbewegungen zueinander möglichst zu vermeiden. Die Größe des Spalt bzw. Abstands zwischen benachbarten Elementen kann bevorzugt einstellbar sein, etwa über die zuvor beschriebenen Verbindungsmittel mit Gewinde, entlang derer die Position einer konternden Mutter zur Einstellung des Abstands gewählt werden kann. Vorzugsweise sind die Koppelmittel so ausgebildet, dass der Spalt bzw. Abstand gerade ausreicht, um die im Messbetrieb zu erwartenden Relativbewegungen zweier miteinander gekoppelter Elemente gerade noch zuzulassen, ohne dass sich die Elemente unmittelbar berühren. Unnötige große Zwischenräume zwischen gekoppelten Elementen werden so vermieden. Der Spalt kann beispielsweise 1 bis 2 Millimeter betragen.

Eine besondere relative Beweglichkeit gekoppelter Elemente, insbesondere für Kurvenfahrten, kann auch erreicht werden, indem die einander gegenüberliegenden Flächen der gekoppelten Elemente einen oder mehrere gekrümmte Abschnitte aufweisen, beispielsweise nach Art eines Kreisbogens oder eines Klöpperbodens.

Ein aus mehreren Elementen zusammengesetzter und durch ein Messsystem bewegter Zug muss hinsichtlich seiner aktuellen Position gegebenenfalls überwacht werden, beispielsweise mittels im Messsystem angeordneten Lichtschranken. Insbesondere kann von Interesse sein, ob bzw. wann ein Zug die Wägeplattform einer Waage erreicht oder verlässt. Ein quer zur Förderrichtung zwischen zwei hintereinander liegenden Elementen hindurchgelangender Lichtstrahl könnte dabei fälschlicherweise als das Ende des Zuges interpretiert werden. Insbesondere bei unnötig großen Zwischenräumen zwischen gekoppelten Elementen wäre dies denkbar. Um das Risiko einer Fehltriggerung vollständig auszuschließen, sieht eine weitere vorteilhafte Ausführungsformen der Erfindung vor, dass zwei in Förderrichtung unmittelbar hintereinander liegende Elemente einander mit Blick quer zur Förderrichtung mittels einem bspw. nasenartigen Vorsprung teilweise überdecken. Entspricht die Förderrichtung der Längsrichtung X, dann könnte die Überdeckung in Querrichtung Y und/oder in Höhenrichtung Z ausgebildet sein. Die Überdeckung kann auf einfache Weise dadurch geschaffen werden, dass ein Abschnitt eines vorausgehenden Elements sich oberhalb bzw. seitlich eines Abschnitts des nachfolgenden Elements erstreckt. Entscheidend ist dabei, dass die Überdeckung bzw. Hinterschneidung in der Richtung und an der Höhen- oder Breitenposition der Elemente gebildet wird, an der im Messsystem eine Lichtschranke oder ein vergleichbarer Sensor den Zug zur Ermittlung des Zugendes oder des Zuganfangs beaufschlagt.

Vorzugsweise sind Elemente des Prüfkörpersystems mit unterschiedlichen Längen bzw. Breiten vorgesehen, wobei die Längen bzw. Breiten nach einem Rastermaß ausgebildet sind, bei dem die Länge bzw. Breite eines Elementes gebildet wird durch ein vorzugsweise ganzzahliges Vielfaches einer Basislänge bzw. Basisbreite, und wobei ein kürzestes bzw. schmalstes Element die Basislänge bzw. Basisbreite oder ein Vielfaches der Basislänge bzw. Basisbreite aufweisen kann. Dadurch lassen sich mehrere einzelne Elemente in ihrer Länge und/oder Breite kombinieren, um die Länge und/oder Breite eines einzelnen weiteren Elementes zu erreichen. Dies unterstützt den modularen Aufbau eines Zugs.

Um die Eigenschaften einzelner Elemente oder deren Bestückung mit Prüfgewichten manuell oder automatisch erfassen zu können, sind nach einer weiteren vorteilhaften Ausführungsformen der Erfindung maschinenlesbare Kennmittel als Teil des Prüfkörpersystems vorgesehen. Diese Kennmittel ermöglichen es, innerhalb eines Zuges für wenigstens ein Element, vorzugsweise für alle Elemente, verschiedener Kenndaten zu erfassen und auszuwerten. Zu solchen Kenndaten können gehören:

- eine am Element vorgesehene Elementidentifikation, die eine Zuordnung bestimmter physikalischer Daten (bspw. Typ, Nummer, Länge, Breite, Höhe, Gewicht, Leergewicht) zum jeweiligen Element ermöglicht;
- die Position des Elements innerhalb des Zuges (T) relativ zu wenigstens einem weiteren Element;
- die Bestückung mit Prüfgewichten nach Art und Position der Prüfgewichte innerhalb des Aufnahmeelements;
- die Gewichtsverteilung innerhalb des Elements, bezogen auf seine Längsrichtung (X) und/oder Querrichtung (Y).

Vorzugsweise sind die Kennmittel so ausgebildet, dass sie Rückschlüsse ermöglichen darauf, welches Prüfgewicht an welcher Position innerhalb eines Aufnahmeelements angeordnet ist. Das kann beispielsweise dadurch erfolgen, dass geeignete Sensoren erfassen, ob eine Tasche bzw. eine bestimmte Position eines Aufnahmeelements von einem Prüfgewicht belegt ist und von welcher Größe oder Art dieses Prüfgewicht ist. So kann insbesondere erfasst werden, welches Gewicht in welcher Tasche angeordnet ist. In Kenntnis bestimmter Eigenschaften der Tasche (beispielsweise ihrer Größe), und unter der Annahme, dass die Tasche mit einem dieser Eigenschaft zuzuordnenden Prüfgewicht bestückt wird (beispielsweise ein Prüfgewicht mit ähnlichem Außendurchmesser wie der Innendurchmesser der Tasche), kann alleine aus der Belegung der Tasche auf das jeweilige Gewichtsstück geschlossen werden.

Denkbar ist jedoch auch, eine Tasche für die wahlweise Aufnahme unterschiedlicher Prüfgewichte vorzusehen. Dazu könnte beispielsweise eine zylindrische Tasche mit radial nach innen absteigenden, konzentrischen Stufen versehen sein, so dass Gewichte mit einem größeren Durchmesser auf einer höheren Stufe aufsitzen, während stattdessen Gewichte mit geringerem Durchmesser in die von einer tiefer liegenden Stufe gebildete Aufnahme einsetzbar sind.

Durch eine automatische Überprüfung einer Tasche dahingehend, welcher Bereich (im vorliegenden Beispiel: welche Stufe) der Tasche von einem Gewicht besetzt ist, lassen sich daher Rückschlüsse auf das jeweilige Gewichtsstück ziehen.

Bei den in die Taschen einzusetzenden Prüfgewichten kann es sich insbesondere um Normalgewichtsstücke handeln entsprechend der Empfehlung OIML R 111, die auch die Anforderungen der dortigen Genauigkeitsklassen M1 oder F1 erfüllen oder die von dieser oder anderen Richtlinien vorgegebenen Dimensionen einhalten. Die Kennmittel sind daher vorzugsweise dazu ausgebildet, eine Zuordnung zu solchen Normalgewichtsstücken zu ermöglichen, beispielsweise durch Erfassen bestimmter Dimensionen der eingesetzten Gewichtsstücke.

Die Kennmittel können auf dem Fachmann bekannten Technologien, beispielsweise Barcode oder RFID, beruhen.. Die Kennmittel können veränderbar oder unveränderbar an oder in einem Element angeordnet sein.

Vorzugsweise weist die Unterseite eines Elements eine umlaufende Fase oder Rundung auf, um die stoßfreie Überführung des Elements von einer Oberfläche des Messsystems auf eine angrenzende andere Oberfläche zu erleichtern.

Ein erfindungsgemäßes Verfahren zur Prüfung von Messsystemen unter Nutzung eines Prüfkörpersystems der vorgenannten Art umfasst wenigstens folgende Schritte:

a) Bildung eines Zuges mit wenigstens zwei miteinander gekoppelten, in X-Richtung hintereinander liegenden und/oder in Y-Richtung nebeneinander liegenden Elementen, von denen wenigstens ein Element ein Aufnahmeelement ist;
b) Bestücken einer Anzahl n der Taschen der Aufnahmeelemente mit Prüfgewichten zur Ausbildung einer Gesamtprüflast des Zuges, wobei gilt n ≥ 0;
c) Bewegen des Zuges in X-Richtung durch bzw. entlang des Messsystems
d) Erfassen und Auswerten von Messwerten, welche das Messsystem im Zusammenhang mit wenigstens einer physikalischen Größe des Zuges, insbesondere seines Gewichts oder seiner Gewichtsverteilung, erfasst.

Zur Ausbildung eines Zugs mit einem bestimmten Gesamtgewicht oder einer bestimmten Gewichtsverteilung ist erfindungsgemäß vorgesehen, einige oder alle Taschen einiger oder aller Aufnahmeelemente des Zugs mit gleichen oder verschiedenen Prüfgewichten zu bestücken. Eine Ausführungsform des Verfahrens sieht jedoch auch vor, dass für eine "Leerfahrt" durch das Messsystem, bei der das Gewicht der einzelnen Aufnahmeelemente nur durch ihr Leergewicht (Tara Gewicht) gebildet wird, unbestückte Aufnahmeelemente verwendet werden. Die Anzahl n der zu bestückenden Taschen ist dann gleich Null.

Das erfindungsgemäße Prüfkörpersystem ist grundsätzlich für verschiedenste Messsysteme geeignet, denen ein Prüfkörper mit bestimmten physikalischen Eigenschaften zugeführt werden muss, um die korrekte Funktion des Messsystems bzw. eine dafür geforderte Genauigkeit überprüfen zu können. Die den Prüfkörper zugehörigen physikalischen Eigenschaften, die auch durch die Bestückung mit Prüfgewichten geschaffen oder verändert werden können, können unter anderem sein:

- Gewicht und Gewichtsverteilung
- Länge, Breite, Höhe, Volumen, kleinster umhüllender Quader;
- Durchstrahlungseigenschaften, insbesondere bezüglich Röntgenstrahlen.

Bevorzugt findet das erfindungsgemäße Prüfkörpersystem Anwendung für industriell genutzte selbsttätige bzw. dynamische Waagen oder sonstige Inspektionssysteme, die mittels eines aus den Elementen des Prüfkörpersystems gebildeten Zugs beaufschlagt werden. Vorzugsweise ist das erfindungsgemäße Verfahren daher auf die Überprüfung eines Messsystems in Form einer Waage gerichtet.

Das erfindungsgemäße Prüfkörpersystem soll nachfolgend anhand von Beispielen näher erläutert werden. Dabei zeigen

Fig. 1 eine vereinfachte perspektivische Ansicht eines Zugs,
Fig. 2 zwei Aufnahmeelemente vor ihrer Kopplung in perspektivischer Ansicht,

Fig.3 ein rechteckiges Aufnahmeelement,
Fig. 4 ein rechteckiges Distanzelement,
Fig. 5 ein Distanzelement im Viertelkreisformat,
Fig. 6 verschiedene Züge, gebildet aus einigen Elementen des erfindungsgemäßen Prüfkörpersystems,
Fig. 7 eine Detailansicht der Kopplung bzw. der Koppelmittel, und
Fig. 8 eine alternative Ausführung von Koppelmitteln.

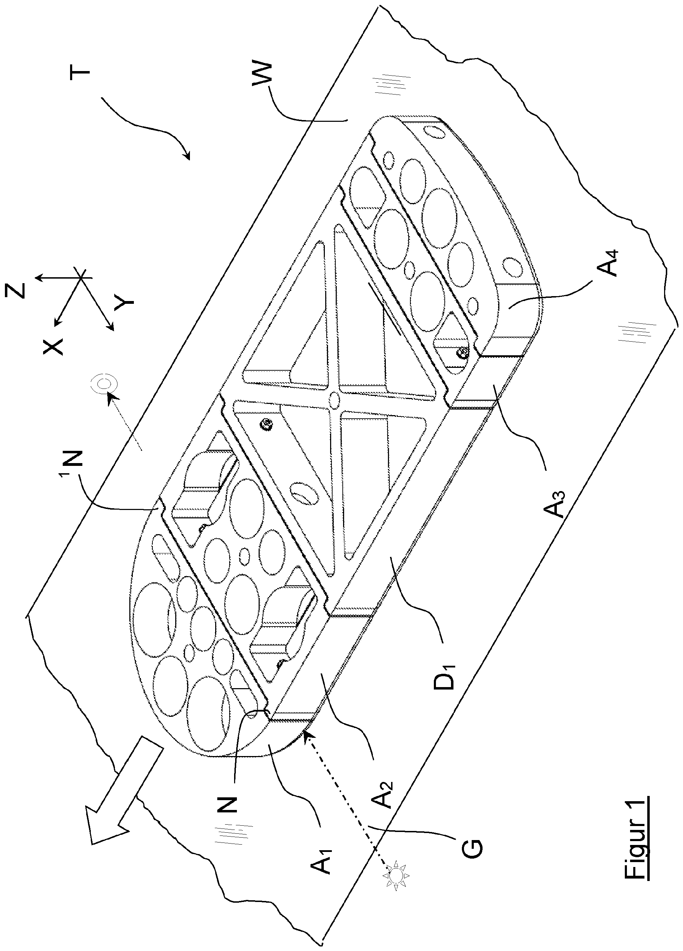

Fig. 1 zeigt in perspektivischer Ansicht einen Zug T, bestehend aus mehreren Elementen eines erfindungsgemäßen Prüfkörpersystems, der entlang einer Oberfläche W eines Messsystems in der durch den Pfeil angedeuteten Richtung bewegt werden soll. Der Zug T erstreckt sich im Wesentlichen in einer Längsrichtung X. Ein vorderstes Element des Zugs wird gebildet durch ein Aufnahmeelement $A_1$ mit in Draufsicht etwa halbkreisförmigem Querschnitt. In Längsrichtung X schließt sich daran ein weiteres Aufnahmeelement $A_2$ an, welches einen etwa rechteckigen Querschnitt hat. Die beiden vordersten Aufnahmeelemente $A_1$, $A_2$ haben etwa die gleiche Länge. Dahinter ist ein Distanzelement $D_1$ mit nahezu quadratischem Querschnitt in den Zug eingefügt, dessen Länge etwa doppelt so groß ist wie die der Aufnahmeelemente $A_1$ oder $A_2$. An das Distanzelement D1 schließt sich ein weiteres rechteckiges Aufnahmeelement $A_3$ an, dessen Länge etwa halb so groß ist wie die der Aufnahmeelemente $A_1$ oder $A_2$. Den Abschluss nach hinten bildet ein weiteres Aufnahmeelement $A_4$, dessen Länge übereinstimmt mit der Länge des vorherigen Aufnahmeelements $A_3$, welches jedoch in Draufsicht den Querschnitt eines Klöpperbodens zeigt. Alle Elemente des Zugs haben in Querrichtung Y die gleiche Breite.

Über in Fig. 1 nicht näher dargestellte Koppelmittel sind die einzelnen Elemente hintereinanderliegend miteinander gekoppelt. Zwischen unmittelbar miteinander gekoppelten Elementen ist ein (in Fig. 1 aufgrund seiner geringen Abmessungen nicht zu erkennender) Spalt eingehalten um eine Relativbewegung zweier miteinander gekoppelter Elemente zuzulassen.

Die Aufnahmeelemente $A_1$ bis $A_4$ sind mit verschiedenen Taschen U versehen, welche zur Aufnahme einzelner Prüfgewichte ausgebildet sind. Der Zug T gemäß Fig. 1 enthält jedoch keine Prüfgewichte und ist für eine Leerfahrt durch das Messsystem vorbereitet. Die durch den Pfeil angedeutete Förderrichtung entspricht hier in etwa der Längsrichtung X, in welcher die einzelnen Elemente hintereinanderliegen.

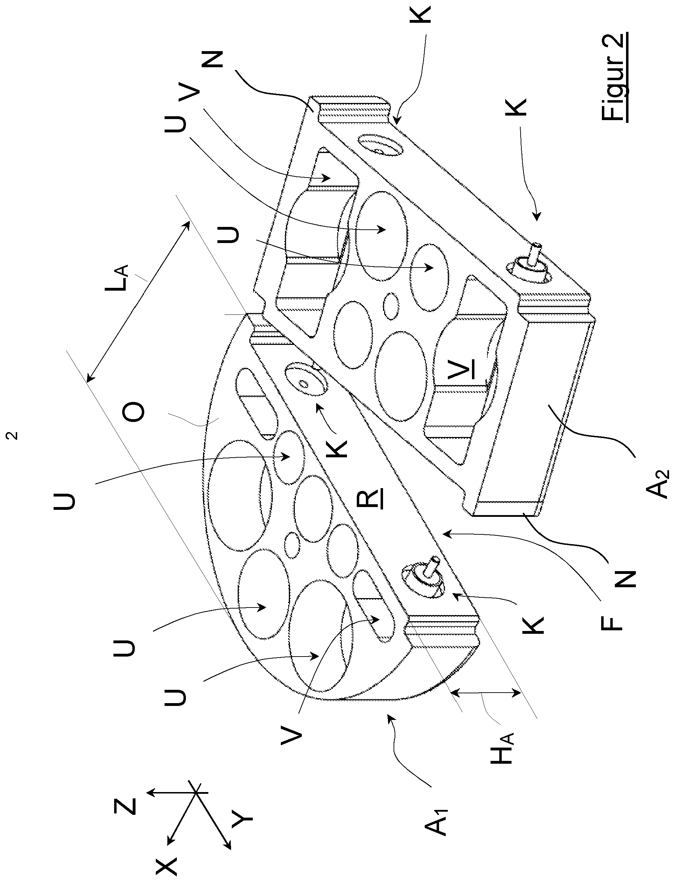

Fig. 2 zeigt die beiden Aufnahmeelemente $A_1$ und $A_2$ gemäß Fig. 1 vor ihrer Kopplung in leicht zueinander versetzter Darstellung. Das halbkreisförmig ausgebildete vorderste Aufnahmeelement A1 besteht - wie auch alle anderen Aufnahmeelemente des Zugs T - im Wesentlichen aus einem Grundkörper R, der auf seiner Unterseite eine vorzugsweise ebene Grundfläche F aufweist, welcher eine dazu parallel verlaufende Oberseite O im Abstand $H_A$ gegenüberliegt. Der Grundkörper R hat eine in Längsrichtung X gemessene Länge $L_A$, eine in Querrichtung Y zu messende Breite $B_A$ (in Fig. 2 nicht benannt) und eine Höhe $H_A$, die in einer zur Längsrichtung X und Querrichtung Y senkrechten Höhenrichtung Z zu messen ist.

Von der Oberseite O des Grundkörpers R erstrecken sich die bereits aus Fig. 1 bekannten Taschen U entgegen der Höhenrichtung Z in die Tiefe. In den Taschen U sind (in den Figuren nicht dargestellte) Anschlagmittel vorgesehen, um ein von oben eingesetztes Prüfgewicht in Höhenrichtung Z zu halten. Abgesehen von den Anschlagmitteln können die Taschen U den Grundkörper R mit konstantem Querschnitt vollständig durchdringen, was seine Herstellung vereinfacht. (Nicht alle Taschen sind in den Figuren vollständig beschriftet)

Zusätzlich zu den für die Aufnahme von Prüfgewichten vorgesehenen Taschen U enthält das erste Aufnahmeelement $A_1$ auch (teilweise beschriftete) Ausnehmungen V, welche nicht zur Aufnahme von Gewichten dienen, sondern stattdessen zur Gewichtsreduzierung der Aufnahmeelemente eingebracht wurden. Auch zur Befestigung von Koppelmitteln (s.u.) können solche Ausnehmungen vorgesehen sein. Auch das weitere Aufnahmeelement $A_2$ ist mit Taschen U versehen, deren Funktion und Gestaltung identisch ist wie die des ersten und alle anderen Aufnahmeelemente. Die Querschnittsform des zweiten Aufnahmeelements $A_2$ ist jedoch rechteckig.

An einer Stirnseite des zweiten Aufnahmeelements sind Koppelmittel K gezeigt, welche zur Kopplung von in Längsrichtung X hintereinander liegenden Elementen (A, D) dienen. Die hier nicht näher gezeigten Koppelmittel können eine Aufnahme bzw. Bohrung in einem Element umfassen. Auch ein in eine solche Aufnahme einzusetzendes elastisches Verbindungsmittel zählt zu den Koppelmitteln. Auf der den Koppelmitteln K gegenüberliegenden Stirnseite des Aufnahmeelements $A_2$ (in Fig. 2 nicht zu sehen) sind ebenfalls Koppelmittel gleicher Art vorgesehen, um die Kopplung mit dem ersten Aufnahmeelement $A_1$ zu ermöglichen. Dazu passende komplementäre Koppelmittel K sind auf der dem zweiten Aufnahmeelement $A_2$ zugewandten Stirnseite des ersten Aufnahmeelements $A_1$ zu sehen.

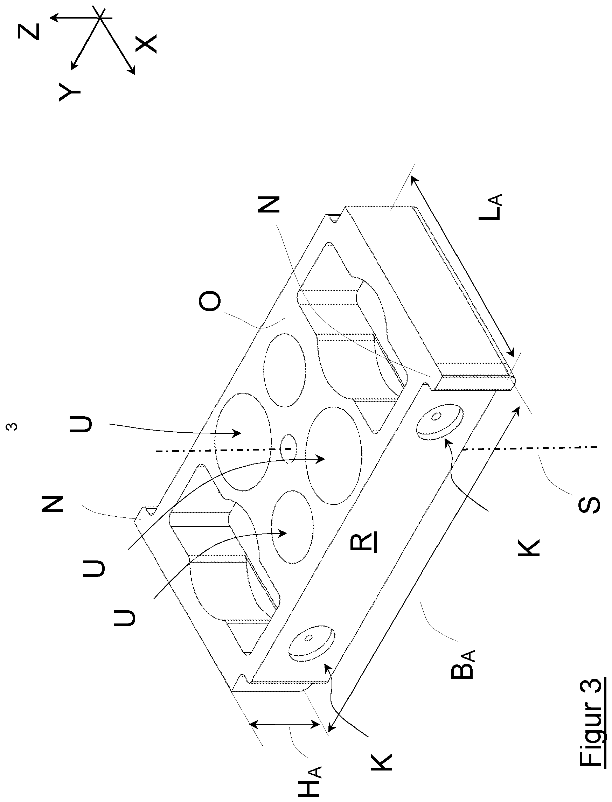

Diejenigen Aufnahmeelemente und Distanzelemente, die zur Anordnung zwischen anderen Elementen vorgesehen sind bzw. nicht mit einer gekrümmten Stirnfläche den Anfang oder das Ende eines Zugs bilden sollen, sind vorzugsweise punktsymmetrisch ausgebildet zu einer das jeweilige Ausnahmeelement mittig durchstoßenden, in Höhenrichtung Z verlaufenden, gedachten Symmetrieachse S (s. Fig. 3). Dadurch ergibt sich der Vorteil, dass ein solches Aufnahmeelement auch um 180° verdreht eingesetzt werden kann, was den Zusammenbau eines Zugs T erleichtert.

Fig. 3 zeigt das Aufnahmeelement $A_2$ in anderer perspektivischer Ansicht, wobei sich wiederholende Bezugszeichen teilweise weggelassen wurden. Dabei zeigt Fig. 3 zwei auch in den anderen Figuren zu sehende Nasen N, die in geringer Breite und mit geringer Länge ein Stück aus dem Grundkörper R des Aufnahmeelements hervorragen. Die Nasen dienen dazu, eine seitliche Überdeckung bzw. Hinterschneidung auszubilden in Bezug auf die Querrichtung Y, in dem jede Nase in eine passende Vertiefung J an einem angekoppelten Nachbarelement eingreift. Fig. 1 zeigt dazu beispielhaft eine Lichtschranke, die oberhalb der Oberfläche W des Messsystems einen Lichtstrahl G quer zur Förderrichtung aussendet, um mit einem gegenüberliegenden Empfänger den Anfang oder das Ende eines durchfahrenden Zugs detektieren zu können. Um den geringfügigen Abstand zwischen den unmittelbar miteinander gekoppelten Elementen (hier $A_1$ und $A_2$) nicht fälschlicherweise als einen solchen Zuganfang oder ein Zugende zu interpretieren, blockieren die Nasen N diesen Lichtstrahl (je nach Richtung des Lichtstrahls kann die Überdeckung bzw. Hinterschneidung auch bezüglich einer anderen Raumrichtung ausgebildet sein. Bei in Höhenrichtung Z detektierender Lichtschranke könnten entsprechend angeordnete Nasen die erforderliche Überdeckung alternativ auch in Höhenrichtung Z ausbilden).

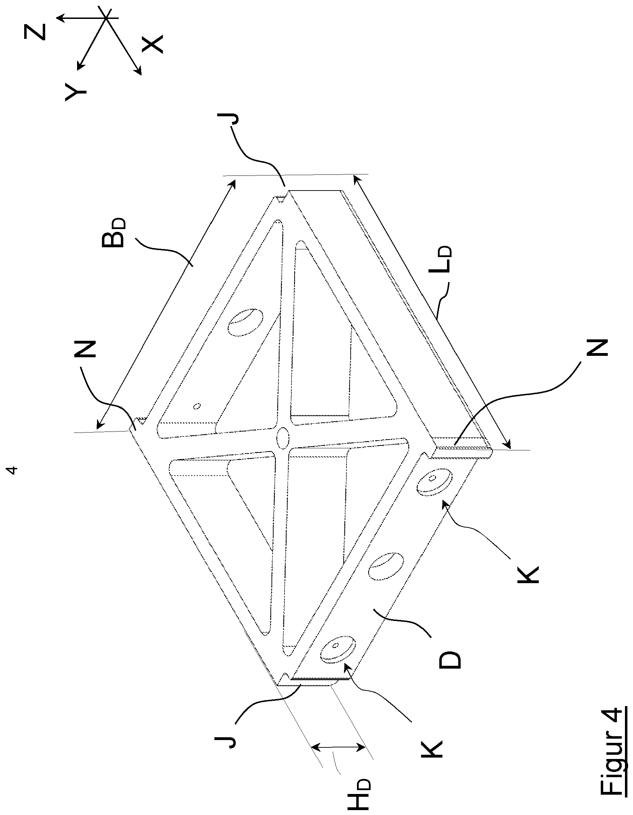

Fig. 4 zeigt eine Ausführungsform eines Distanzelements D. Dieses dient nicht zur Aufnahme von Prüfgewichten, sondern insbesondere zur Festlegung eines vorgebbaren Abstands zwischen zwei anderen Elementen eines Zugs. Es erstreckt sich über eine breite $B_D$, eine Länge $L_D$ und eine Höhe $H_D$. Im Beispiel gemäß Fig. 1 ist die Breite und Höhe aller Elemente jeweils gleich groß gewählt.

Um das Distanzelement möglichst leicht auszubilden, kann es - wie in Fig. 4 dargestellt ist - beispielsweise als Wabenstruktur gefertigt sein. Die im vorliegenden Fall rechteckige bzw. quadratische Struktur wird gebildet durch vier die Außenseiten des Distanzelements D darstellende, umlaufende Wandabschnitte. Zwei weitere Wandabschnitte erstrecken sich diagonal zwischen gegenüberliegenden Ecken und verleihen dem Distanzelement D die nötige Steifigkeit.

Auch die Distanzelemente des Prüfkörpersystems sind mit Koppelmitteln (K) ausgestattet, um an andere Elemente (Aufnahmeelement oder weiteres Distanzelement) angekoppelt zu werden. Die mit einem Distanzelement D zusammenwirkenden Koppelmittel K sind bevorzugt genauso ausgebildet bzw. positioniert wie jene eines Aufnahmeelements, um wahlweise ein Aufnahmeelement oder ein weiteres Distanzelement ankoppeln zu können.

Die für die Aufnahmeelemente bereits vorgestellten Nasen N bzw. Ausnehmungen H sind auch an den Distanzelementen vorgesehen, um die gewünschte Hinterschneidung zu erzielen.

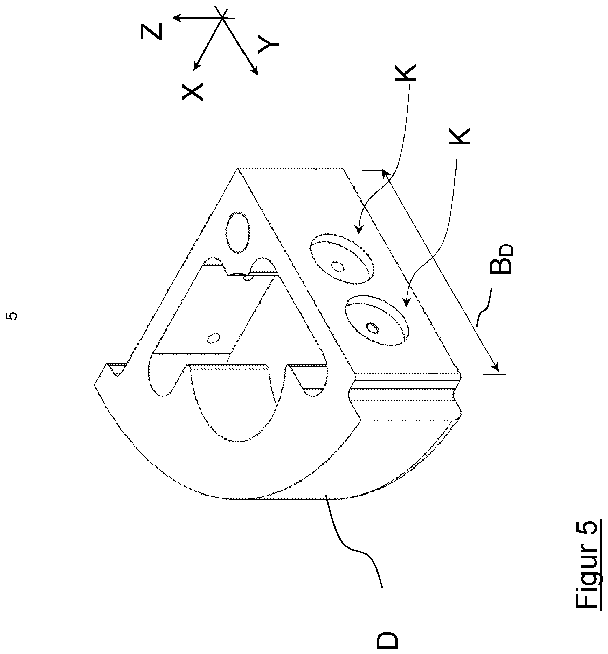

Fig. 5 zeigt ein weiteres Aufnahmeelement A , welches in Draufsicht einen Viertelkreisquerschnitt aufweist. In Längsrichtung X kann das Aufnahmeelement A unter Nutzung der angedeuteten Koppelmittel an ein weiteres Element angekoppelt werden. Entlang des Viertelkreisumfangs sind keine weiteren Koppelmittel vorgesehen, da dieses Aufnahmeelement A den Anfang oder das Ende eines Zugs bilden soll. Die Breite $B_A$ des Aufnahmeelements A ist nur halb so groß wie diejenige der beispielsweise in Fig. 1 gezeigten Elemente. Ein weiteres viertelkreisförmiges Aufnahmeelement A lässt sich in Querrichtung Y so neben dem Aufnahmeelement A gemäß Fig. 5 anordnen, dass beide Aufnahmeelemente zusammen eine halbkreisförmige Front ausbilden mit einer Gesamtbreite, die beispielsweise der in Fig. 1 gezeigten Breite des Zugs entspricht. Alternativ können jedoch auch weitere, insbesondere rechteckige Aufnahmeelemente oder Distanzelemente in Querrichtung an das erste viertelkreisförmige Aufnahmeelement A anschließen, bevor die Anordnung in Querrichtung wieder mit einem viertelkreisförmigen Aufnahmeelement A abschließt.

Obwohl die in den Figuren gezeigten Distanzelemente und Aufnahmeelemente keine Koppelmittel zeigen, die ein Koppeln in Querrichtung Y ermöglichen, ist eine solche Kopplung bzw. die Vorsehung dafür geeigneter Koppelmittel ohne weiteres alternativ oder zusätzlich möglich. Entsprechend ist es möglich, einen Zug T auszubilden, der in Querrichtung und/oder in Längsrichtung mehr als nur ein Element aufweist. Die Größe der einzelnen Elemente kann dabei unterschiedlich und nach Maßgabe eines Rasters gewählt werden, bei dem die Breite oder Länge eines Elements einem Vielfachen der Breite oder Länge eines anderen Elements entspricht.

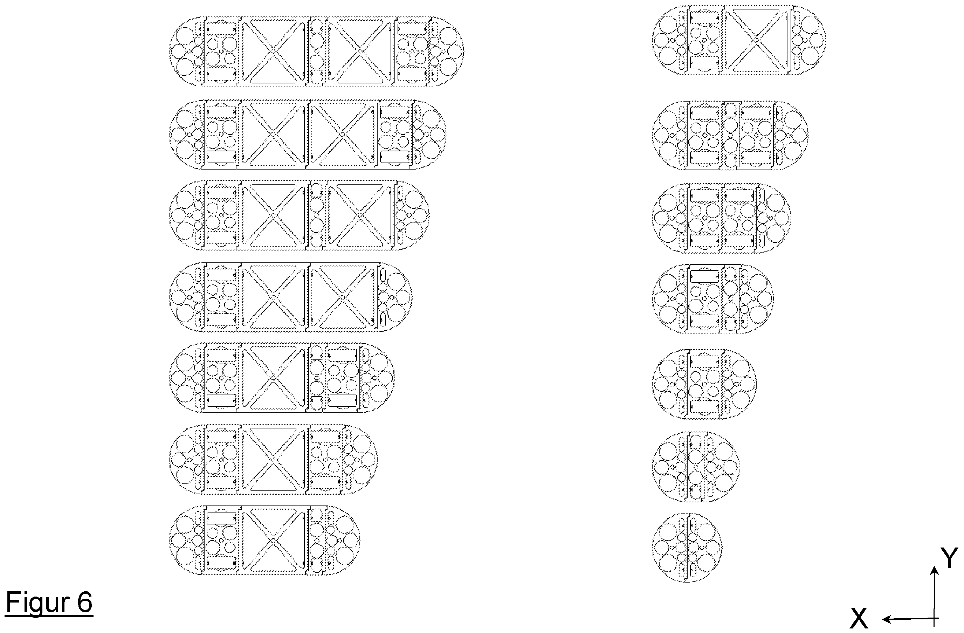

Fig. 6 zeigt beispielhaft einige nicht näher beschriftete Züge T, die sich in Längsrichtung X erstrecken und jeweils mit einem halbkreisförmigen Aufnahmeelement beginnen und enden. Dazwischen können weitere Aufnahmeelemente oder Distanzelemente in frei wählbarer Reihenfolge und Länge angeordnet werden, wobei in Längsrichtung X jeweils unmittelbar hintereinander liegende Elemente durch in Fig. 6 nicht näher dargestellte Koppelmittel aneinander gekoppelt sind.

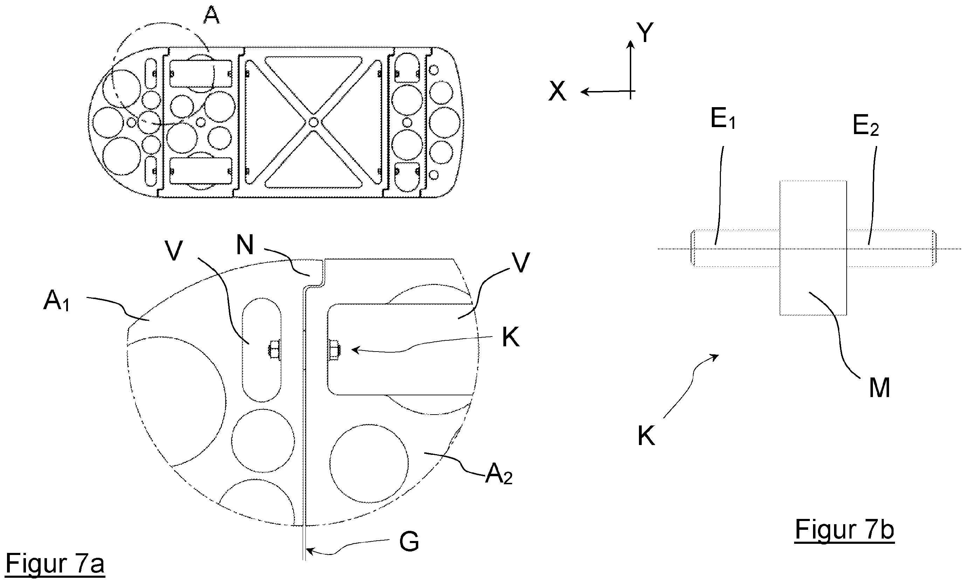

Fig. 7a zeigt in vergrößerter vereinfachter Darstellung die Kopplung zweier Elemente. Der durch den strichpunktieren Kreis A markierte Bereich zweier miteinander in Längsrichtung X gekoppelter Aufnahmeelemente $A_1$ und $A_2$ ist im unteren Teil vergrößert dargestellt in Draufsicht entgegen der Höhenrichtung Z. Dazu ist ein in Fig. 7b vereinfacht dargestelltes Koppelelement als Teil der Koppelmittel K zwischen die beiden Aufnahmeelemente eingefügt.

Das Koppelelement ist im Wesentlichen rotationssymmetrisch um eine Längsachse ausgebildet. Von einem zentrisch angeordneten elastischen Kern M erstrecken sich in entgegengesetzten Richtungen entlang der Rotationsachse zwei getrennte Verbindungsmittel $E_1$, $E_2$ in Form von Gewindestäben. Die Gewindestäbe sind dazu vorgesehen, jeweils durch eine Bohrung in einem der beiden miteinander zu koppelnden Elemente $A_1$, $A_2$ hindurchgeführt und rückwärtig mit Muttern verschraubt zu werden.

Die in Fig. 7a gezeigten und in diesem Fall nicht für die Aufnahme von Prüfgewichten vorgesehenen Aussparungen V ermöglichen dabei den Zugriff auf die Muttern, um die Kopplung nach Bedarf vorzunehmen oder wieder lösen zu können. Aus den Figuren 1 bis 7 ist außerdem zu entnehmen, dass die Kopplung zweier Elemente vorzugsweise über doppelt vorgesehene Koppelmittel erfolgt, die bevorzugt symmetrisch zu einer mittigen X-Z-Ebene an den Elementen positioniert sind.

Die beiden zu beiden Seiten an den elastischen Kern M anschließenden Gewindestäbe $E_1$, $E_2$ - und damit auch die mit ihnen verschraubten Elemente $A_1$, $A_2$ - sind aufgrund des elastischen Kerns M relativ zueinander beweglich, sodass je nach Elastizität translatorische und/oder rotatorische Relativbewegungen zwischen den aneinandergekoppelten Elementen möglich sind. Dies umfasst insbesondere Relativbewegungen in Höhenrichtung Z oder Kippbewegungen um gedachte Schwenkachsen, die insbesondere in Querrichtung Y oder Höhenrichtung Z verlaufen. Um eine solche Relativbewegung zuzulassen, sind die Koppelmittel so ausgebildet, dass zwei miteinander gekoppelte Elemente $A_1$, $A_2$ einen geringen Abstand bzw. Spalt G zwischen sich aufweisen.

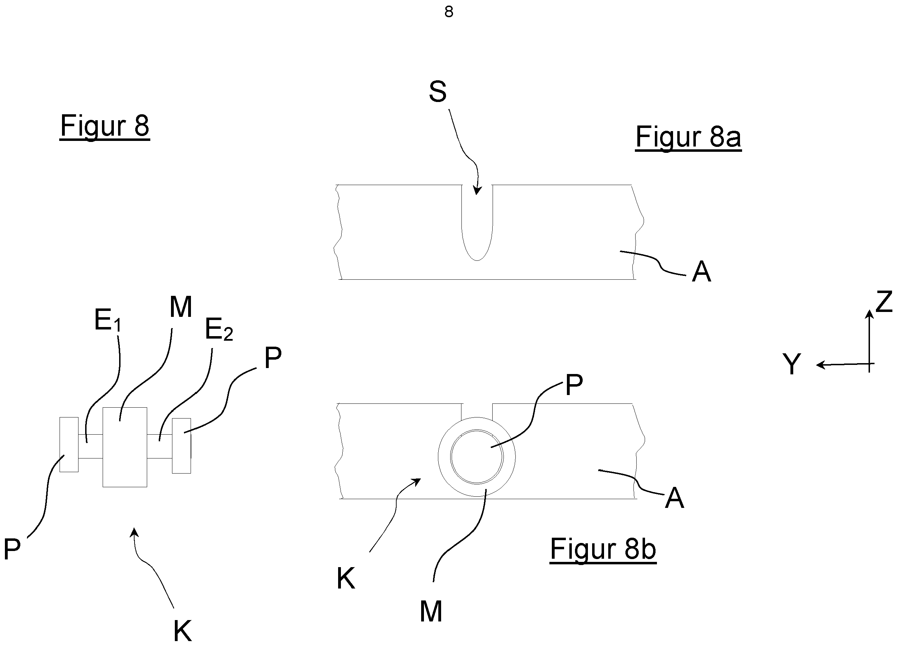

Fig. 8 zeigt eine alternative Ausführungsform der Koppelmittel K in vereinfachter Darstellung. Die Koppelmittel umfassen dabei einen hantelartigen Körper, der ähnlich wie im Beispiel gemäß Fig. 7b einen zentrischen elastischen Abschnitt M aufweist mit zwei sich in entgegengesetzter Richtung davon fort erstreckenden, steg- oder stabförmigen Verbindungsmitteln $E_1$, $E_2$. Hier sind die Verbindungsmittel jedoch nicht als Gewindestäbe ausgeführt. Stattdessen tragen sie an ihren Enden jeweils eine flanschartige Erweiterung P.

In einer vereinfacht dargestellten Stirnwand eines Elements A ist eine in Höhenrichtung Z verlaufende längliche Nut eingebracht, deren Durchmesser in etwa dem Außendurchmesser der Verbindungsmittel E entspricht (Fig. 8a). Das hantelartige Koppelmittel lässt sich mit einem der beiden Verbindungsmittel E so in die Nut S einschieben, dass der zugehörige Flansch P die Stirnwand des Elements A vorzugsweise klemmend hintergreift, während der elastische Abschnitt M auf der Außenseite des Elements zu liegen kommt (Fig. 8b) und den dazwischen liegenden Wandabschnitt bevorzugt klemmend einfasst. Ein dem Element A gegenüberliegend angeordnetes (und in Fig. 8 nicht dargestelltes) weiteres Element kann mit vergleichbar ausgebildeter Nut S in seiner Stirnseite über das andere Verbindungsmittel E mit zugehörigem Flansch P entsprechend angekoppelt werden, so dass der elastische Bereich M, vorzugsweise spielfrei, zwischen den beiden so miteinander gekoppelten Elementen angeordnet ist.

Diese Kopplung lässt sich besonders leicht und werkzeuglos herstellen bzw. lösen, indem das hantelartige Koppelmittel einfach in bzw. entgegen der Höhenrichtung Z zwischen zwei miteinander zu koppelnden Elementen A in die jeweilige Nut S eingeschoben wird.

Die vorstehend beschriebenen Gestaltungsmerkmale einzelner Aufnahmeelemente sind nicht auf das jeweils beschriebene Aufnahmeelement beschränkt, sondern für alle Aufnahmeelemente des erfindungsgemäßen Prüfkörpersystems denkbar, soweit dies funktionell oder geometrisch nicht ausgeschlossen ist. Das betrifft insbesondere die Anordnung bzw. Gestaltung der Symmetrieachse S, der Koppelmittel K, der Nasen N, der Taschen U, der Ausnehmungen V und der speziellen Länge oder Breite oder Höhe.

Bezugszeichen

| A | Aufnahmeelement |
|---|---|
| B | Breite |
| D | Distanzelement |
| E | Verbindungsmittel |
| F | Grundfläche |
| G | Spalt |
| H | Höhe |
| J | Vertiefung |
| K | Koppelmittel |
| L | Länge |
| M | elastischer Abschnitt |
| N | Nase |
| O | Oberseite (eines Elements) |
| P | Flansch |
| R | Grundkörper |
| S | Nut |
| T | Zug |
| U | Tasche |
| V | Aussparung |
| W | Oberfläche |
| X | Längsrichtung |
| Y | Querrichtung |
| Z | Höhenrichtung |

**Patentansprüche**

1. Prüfkörpersystem, umfassend wenigstens zwei miteinander koppelbare Elemente, die dabei in einer Längsrichtung (X) hintereinander und/oder in einer zur Längsrichtung (X) rechtwinkligen, vorzugsweise horizontalen Querrichtung (Y) nebeneinander anordenbar sind, um einen die wenigstens zwei Elemente umfassenden Zug (T) mit einer vorgebbaren Gesamtprüflast und/oder einer vorgebbaren X-Länge und/oder einer vorgebbaren Y-Breite auszubilden und über eine Oberfläche (W) eines Messsystems zu führen,

    a) wobei wenigstens ein erstes Element der wenigstens zwei Elemente ausgebildet ist als Aufnahmeelement (A), welches sich mit einer Länge ($L_A$) in Längsrichtung (X), mit einer Breite ($B_A$)

in Querrichtung (Y) und mit einer Höhe ($H_A$) in einer zur Längsrichtung (X) und zur Querrichtung (Y) orthogonal verlaufenden Höhenrichtung (Z) erstreckt, und eine Grundfläche (F) zur Auflage auf der Oberfläche (W) aufweist,
b) und wobei wenigstens ein weiteres Element (A, D) der wenigstens zwei Elemente ausgebildet ist

     $b_1$) als weiteres Aufnahmeelement (A), dessen Dimensionsabmessungen mit denen des ersten Aufnahmeelements (A) übereinstimmen oder sich in wenigstens einer Abmessung davon unterscheiden,
     oder
     $b_2$) als Distanzelement (D), welches sich mit einer Länge ($L_D$) in Längsrichtung (X), mit einer Breite ($B_D$) in Querrichtung (Y) und mit einer Höhe ($H_D$) in Höhenrichtung (Z) erstreckt;

     c) wobei jedes als Aufnahmeelement (A) oder Distanzelement (D) ausgebildete Element (A, D) Koppelmittel (K) aufweist, um zwei in X-Richtung oder Y-Richtung unmittelbar hintereinander bzw. nebeneinander angeordnete Elemente (A, D) lösbar miteinander koppeln zu können,
     d) und wobei jedes Aufnahmeelement (A) einen Grundkörper (R) mit einer oder mehreren Taschen (U) aufweist, wobei wenigstens eine Tasche (U) zur temporären Aufnahme eines Prüfgewichts (G) ausgebildet ist,

     und **dadurch gekennzeichnet, dass** sich die Taschen (U) ausgehend von einer der Grundfläche (F) gegenüberliegenden Oberseite (O) in Höhenrichtung (Z) in den Grundkörper (R) hinein erstrecken.

2. Prüfkörpersystem nach Anspruch 1, ferner umfassend wenigstens ein Distanzelement (D), um einen Zug (Z) aus mehreren hintereinander und/oder nebeneinander angeordneten und miteinander gekoppelten Elementen (A, D) in einer vorgebbaren Gesamtlänge und/oder Gesamtbreite zusammenstellen zu können, wobei Distanzelemente (D) des Prüfkörpersystems nicht zur Aufnahme vom Prüfgewichten vorgesehen sind.

3. Prüfkörpersystem nach Anspruch 1 oder 2, **dadurch gekennzeichnet, dass** die Koppelmittel (K) der Aufnahmeelemente (A) gleich ausgebildet sind wie die Koppelmittel (K) der Distanzelemente (D), um wahlweise zwei Distanzelemente (D) oder zwei Aufnahmeelemente (A) oder ein Aufnahmeelement (A) und ein Distanzelement (D) eines Zuges (T) unmittelbar miteinander zu koppeln.

4. Prüfkörpersystem nach einem der vorigen Ansprüche, **dadurch gekennzeichnet, dass** der Grundkörper (R) der Aufnahmeelemente (A) eine der Grundfläche (F) abgewandte Oberseite (O) aufweist, wobei sich die Taschen (U) senkrecht zur Oberseite (O) und/oder entlang der Höhenrichtung (Z) in den Grundkörper (R) hinein erstrecken.

5. Prüfkörpersystem nach einem der vorigen Ansprüche, **dadurch gekennzeichnet, dass** die Höhe ($H_A$, $H_D$) der Aufnahmeelemente (A) und/oder der Distanzelemente (D) im Verhältnis zur Länge ($L_A$, $L_D$) und/oder zur Breite ($B_A$, $B_D$) gering ausfällt, so dass die Elemente (A, D) einen vorzugsweise flachen Körper bilden, wobei vorzugsweise gilt

     a) ($L_A$, $L_D$) > ($H_A$, $H_D$) und/oder ($B_A$, $B_D$) > ($H_A$, $H_D$),
     vorzugsweise ($L_A$, $L_D$) > 5·($H_A$, $H_D$) und/oder ($B_A$, $B_D$) > 3·($H_A$, $H_D$) und/oder
     b)

$$H_A = H_D$$

     und/oder
     c)

$$B_A = B_D$$

6. Prüfkörpersystem nach einem der vorigen Ansprüche, **dadurch gekennzeichnet, dass** das wenigstens eine Distanzelement (D) einen Distanzelementkörper aufweist, der zur Gewichtsreduzierung als Wabe oder Stabwerk ausgebildet ist und/oder wenigstens eine Aussparung aufweist, die den Distanzelementkörper in Z-Richtung teilweise oder vollständig durchdringt.

7. Prüfkörpersystem nach einem der vorigen Ansprüche, **dadurch gekennzeichnet, dass** zwei in X-Richtung unmittelbar aneinander gekoppelte Elemente (A, D) eines Zuges (T) einander in Y-Richtung teilweise überdecken.

8. Prüfkörpersystem nach einem der vorigen Ansprüche, **dadurch gekennzeichnet, dass** ein Element (A, D) einen X-Y-Außenquerschnitt aufweist

     a) mit der Form eines regelmäßigen oder unregelmäßigen Vielecks mit einer Breite ($B_A$, $B_D$) und einer Länge ($L_A$, $L_D$), und/oder
     b) mit einem wenigstens teilweise gerundeten Abschnitt, der sich über die Breite ($B_A$, $B_D$) erstreckt und die Form eines Klöpperbodens oder eines Kreisbogens, insbesondere eines Viertelkreises oder eines Halbkreises, aufweist.

**9.** Prüfkörpersystem nach einem der vorigen Ansprüche, **dadurch gekennzeichnet, dass** die jeweils zwei Elemente miteinander koppelnden Koppelmittel (K) dazu ausgebildet sind, Zug- und/oder Schub- und/oder Druckkräfte zwischen den zwei Elementen zu übertragen, wobei die Koppelmittel elastisch sind, um unter Beibehaltung der Kopplung

a) ein biegeschlaffes Verkippen der miteinander gekoppelten Elemente (A, D) relativ zueinander innerhalb vorgebbarer Toleranzen zuzulassen, insbesondere um eine in Längsrichtung (X) oder Querrichtung (Y) oder Höhenrichtung (Z) verlaufende Kippachse
und/oder
b) eine translatorische Bewegung der zwei Elemente relativ zueinander zuzulassen,
und/oder
c) die Übertragung von Stößen zwischen den zwei Elementen zu dämpfen und/oder zu federn.

**10.** Prüfkörpersystem nach einem der vorigen Ansprüche, **dadurch gekennzeichnet, dass** zwei unmittelbar miteinander gekoppelte Elemente (A, D) zwischen sich einen Abstand, insbesondere einen Spalt, bilden, um eine direkte Kontaktierung der zwei Elemente (A, D) auch bei deren Relativbewegungen zueinander weitgehend oder vollständig zu vermeiden.

**11.** Prüfkörpersystem nach einem der vorigen Ansprüche, **dadurch gekennzeichnet, dass** Elemente (A, D) mit unterschiedlichen Längen ($L_A$, $L_D$) bzw. Breiten ($B_A$, $B_D$) vorgesehen sind, wobei die Längen bzw. Breiten nach einem Rastermaß ausgebildet sind, bei dem die Länge ($L_A$, $L_D$) bzw. Breite ($B_A$, $B_D$) eines Elementes (A, D) gebildet wird durch ein vorzugsweise ganzzahliges Vielfaches einer Basislänge bzw. Basisbreite, und wobei ein kürzestes bzw. schmalstes Element (A, D) die Basislänge bzw. Basisbreite oder ein Vielfaches der Basislänge bzw. Basisbreite aufweisen kann.

**12.** Prüfkörpersystem nach einem der vorigen Ansprüche, ferner umfassend maschinenlesbare Kennmittel, um innerhalb eines Zuges (T) für wenigstens ein Element (A, D)

a) eine am Element (A, D) vorgesehene Elementidentifikation, und/oder
b) dessen Position innerhalb des Zuges (T) relativ zu wenigstens einem weiteren Element (A, D), und/oder
c) dessen Abmessung in Längsrichtung (X) und/oder in Querrichtung (Y) und/oder Höhenrichtung und/oder dessen Leergewicht und/oder
d) die Bestückung mit Prüfgewichten nach Art und Position der Prüfgewichte innerhalb des Aufnahmeelements (A) und/oder
e) dessen Gesamtgewicht und/oder Gewichtsverteilung in Längsrichtung (X) und/oder Querrichtung (Y)

manuell oder automatisch erfassen zu können.

**13.** Zug (T), gebildet durch eine Anordnung von wenigstens zwei Elementen (A, D) eines Prüfkörpersystems nach einem der vorigen Ansprüche, mit wenigstens einem Aufnahmeelement (A), welches in X-Richtung und/oder Y-Richtung mit einem unmittelbar angrenzenden weiteren Element (A, D) gekoppelt ist.

**14.** Verfahren zur Prüfung von Messsystemen unter Nutzung eines Prüfkörpersystems nach einem der vorigen Ansprüche, umfassend folgende Schritte:

a) Bildung eines Zuges (T) mit wenigstens zwei miteinander gekoppelten, in X-Richtung hintereinander liegenden und/oder in Y-Richtung nebeneinander liegenden Elementen (A, D), von denen wenigstens ein Element ein Aufnahmeelement (A) ist;
b) Bestücken einer Anzahl (n) der Taschen (U) der Aufnahmeelemente (A) mit Prüfgewichten (G) zur Ausbildung einer Gesamtprüflast des Zuges (T), wobei gilt n ≥ 0;
c) Bewegen des Zuges in X-Richtung durch bzw. entlang des Messsystems
d) Erfassen und Auswerten von Messwerten, welche das Messsystem im Zusammenhang mit wenigstens einer physikalischen Größe des Zuges, insbesondere seines Gesamtgewichts und/oder seiner Gewichtsverteilung, erfasst.

**15.** Verfahren nach dem vorhergehenden Anspruch, **dadurch gekennzeichnet, dass** durch die Bestückung der Taschen (U) eine vorgebbare Gewichtsverteilung entlang der Gesamtlänge ($L_T$) und/oder der Gesamtbreite ($B_T$) des Zuges (T) nachgebildet wird.

## Claims

**1.** Testing body system comprising at least two elements which can be coupled to one another and can be arranged one behind the other in a longitudinal direction (X) and/or next to one another in a preferably horizontal transverse direction (Y) at a right angle to the longitudinal direction (X) in order to form a train (T) which comprises the at least two elements and has a predeterminable total test load and/or a predeterminable X length and/or a predeterminable Y width and to guide it over a surface (W) of a measuring system,

a) at least one first element of the at least two elements being designed as a receiving element (A) which extends with a length ($L_A$) in the longitudinal direction (X), with a width ($B_A$) in the transverse direction (Y) and with a height ($H_A$) in a vertical direction (Z) extending orthogonally to the longitudinal direction (X) and to the transverse direction (Y), and has a base surface (F) for resting on the surface (W),

b) and at least one further element (A, D) of the at least two elements being designed

$b_1$) as a further receiving element (A), of which the dimensions correspond to those of the first receiving element (A) or differ in at least one dimension therefrom, or

$b_2$) as a spacer element (D) which extends with a length ($L_D$) in the longitudinal direction (X), with a width (Bo) in the transverse direction (Y) and with a height ($H_D$) in the vertical direction (Z);

c) each element (A, D) designed as a receiving element (A) or spacer element (D) has coupling means (K) in order to be able to releasably couple two elements (A, D) to one another which are arranged directly one behind the other or next to one another in the X direction or Y direction,

d) and each receiving element (A) having a main body (R) having one or more pockets (U), at least one pocket (U) being designed to temporarily receive a test weight (G),

and **characterized in that** the pockets (U) extend into the main body (R) starting from an upper side (O) opposite the base surface (F) in the vertical direction (Z).

2. Testing body system according to claim 1, further comprising at least one spacer element (D) in order to be able to combine a train (Z) consisting of a plurality of elements (A, D) which are arranged one behind the other and/or next to one another and coupled to one another in a predeterminable total length and/or total width, wherein spacer elements (D) of the testing body system are not provided for receiving the test weights.

3. Testing body system according to either claim 1 or claim 2,
**characterized in that** the coupling means (K) of the receiving elements (A) are designed the same as the coupling means (K) of the spacer elements (D) in order to selectively couple two spacer elements (D) or two receiving elements (A) or a receiving element (A) and a spacer element (D) of a train (T) directly to one another.

4. Testing body system according to any of the preceding claims, **characterized in that** the main body (R) of the receiving elements (A) has an upper side (O) facing away from the base surface (F), the pockets (U) extending perpendicularly to the upper side (O) and/or in the height direction (Z) into the main body (R).

5. Testing body system according to any of the preceding claims, **characterized in that** the height ($H_A$, $H_D$) of the receiving elements (A) and/or the spacer elements (D) in relation to the length ($L_A$, $L_D$) and/or in relation to the width ($B_A$, $B_D$) is low so that the elements (A, D) form a preferably flat body, where preferably

a) ($L_A$, $L_D$) > ($H_A$, $H_D$) and/or ($B_A$, $B_D$) > ($H_A$, $H_D$), preferably ($L_A$, $L_D$) > 5·($H_A$, $H_D$) and/or ($B_A$, $B_D$) > 3·($H_A$, $H_D$)
and/or
b)

$$H_A = H_D$$

and/or
c)

$$B_A = B_D$$

6. Testing body system according to any of the preceding claims, **characterized in that** the at least one spacer element (D) has a spacer element body which is designed as a honeycomb or rod assembly to reduce the weight and/or has at least one recess which partly or completely penetrates the spacer element body in the Z direction.

7. Testing body system according to any of the preceding claims, **characterized in that** two elements (A, D) of a train (T) which are directly coupled to one another in the X direction partly overlap one another in the Y direction.

8. Testing body system according to any of the preceding claims, **characterized in that** an element (A, D) has an X-Y outer cross section

a) having the shape of a regular or irregular polygon having a width ($B_a$, $B_D$) and a length ($L_a$, $L_D$), and/or
b) having an at least partly rounded portion which extends over the width ($B_A$, $B_D$) and has the shape of a torospherical head or a circular arc, in particular a quarter circle or a semicircle.

9. Testing body system according to any of the preceding claims, **characterized in that** the coupling means (K) which each couple two elements to one another are designed to transmit tensile and/or pushing and/or compressive forces between the two elements, the coupling means being elastic in order, while maintaining the coupling, to

    a) allow flexible tilting of the elements (A, D) which are coupled to one another relative to one another within predeterminable tolerances, in particular about a tilting axis extending in the longitudinal direction (X) or transverse direction (Y) or vertical direction (Z),
and/or
    b) allow a translational movement of the two elements relative to one another, and/or
    c) to damp and/or bounce the transmission of shocks between the two elements.

10. Testing body system according to any of the preceding claims, **characterized in that** two elements (A, D) which are directly coupled to one another form a distance between them, in particular a gap, in order to largely or completely avoid direct contacting of the two elements (A, D) even in the case of their relative movements relative to one another.

11. Testing body system according to any of the preceding claims, **characterized in that** elements (A, D) having different lengths ($L_A$, $L_D$) or widths ($B_A$, $B_D$) are provided, the lengths or widths being designed according to a grid dimension in which the length ($L_A$, Lo) or width ($B_A$, $B_D$) of an element (A, D) is formed by a preferably integer multiple of a base length or base width, and it being possible for a shortest or narrowest element (A, D) to have the base length or base width or a multiple of the base length or base width.

12. Testing body system according to any of the preceding claims, further comprising machine-readable identifiers in order to be able to manually or automatically detect, for at least one element (A, D) within a train (T),

    a) an element identification which is provided on the element (A, D), and/or
    b) its position within the train (T) relative to at least one further element (A, D), and/or
    c) its dimension in the longitudinal direction (X) and/or in the transverse direction (Y) and/or the vertical direction and/or its empty weight, and/or
    d) the equipment with test weights according to the type and position of the test weights within the receiving element (A), and/or
    e) its total weight and/or weight distribution in the longitudinal direction (X) and/or transverse direction (Y).

13. Train (T) which is formed by an arrangement of at least two elements (A, D) of a testing body system according to any of the preceding claims and has at least one receiving element (A) which is coupled to an immediately adjacent further element (A, D) in the X direction and/or Y direction.

14. Method for testing measuring systems using a testing body system according to any of the preceding claims, comprising the following steps:

    a) forming a train (T) having at least two elements (A, D) which are coupled to one another, which are one behind the other in the X direction and/or are next to one another in the Y direction and of which at least one element is a receiving element (A);
    b) equipping a number (n) of the pockets (U) of the receiving elements (A) with test weights (G) to form a total test load of the train (T), where n $\geq$ 0;
    c) moving the train in the X direction through or along the measuring system;
    d) detecting and evaluating measured values which the measuring system detects in connection with at least one physical variable of the train, in particular its total weight and/or its weight distribution.

15. Method according to the preceding claim, **characterized in that** by equipping the pockets (U), a predeterminable weight distribution is simulated along the total length ($L_T$) and/or the total width ($B_T$) of the train (T).

**Revendications**

1. Système de corps d'essai, comprenant au moins deux éléments pouvant être accouplés l'un à l'autre, lesquels peuvent être disposés l'un derrière l'autre dans une direction longitudinale (X) et/ou l'un à côté de l'autre dans une direction transversale (Y) perpendiculaire à la direction longitudinale (X), de préférence horizontale, afin de former un train (T) comprenant les au moins deux éléments et comportant une charge d'essai totale pouvant être prédéfinie et/ou une longueur X pouvant être prédéfinie et/ou une largeur Y pouvant être prédéfinie et de le guider sur une surface (W) d'un système de mesure,

    a) dans lequel au moins un premier élément parmi les au moins deux éléments est conçu comme un élément de réception (A) qui s'étend avec une longueur ($L_A$) dans la direction longitudinale (X), avec une largeur ($B_A$) dans la direction transversale (Y) et avec une hauteur ($H_A$) dans une direction de la hauteur (Z) s'étendant orthogonalement à la direction longitudinale (X) et à la direction transversale (Y), et qui présente une surface de base (F) pour l'appui sur la surface (W),

b) et dans lequel au moins un autre élément (A, D) parmi les au moins deux éléments est conçu

$b_1$) comme un autre élément de réception (A), dont les dimensions correspondent à celles du premier élément de réception (A) ou s'en distinguent par au moins une dimension,

ou

$b_2$) comme un élément d'écartement (D) qui s'étend avec une longueur ($L_D$) dans la direction longitudinale (X), avec une largeur ($B_D$) dans la direction transversale (Y) et avec une hauteur (Ho) dans la direction de la hauteur (Z) ;

c) dans lequel chaque élément (A, D) conçu comme élément de réception (A) ou élément d'écartement (D) présente des moyens d'accouplement (K) afin de pouvoir accoupler l'un à l'autre de manière amovible deux éléments (A, D) disposés directement l'un derrière l'autre ou l'un à côté de l'autre dans la direction X ou la direction Y,

d) et dans lequel chaque élément de réception (A) présente un corps de base (R) comportant une ou plusieurs cavités (U), dans lequel au moins une cavité (U) est conçue pour recevoir temporairement un poids d'essai (G),

et **caractérisé en ce que** les cavités (U) s'étendent dans le corps de base (R) dans la direction de la hauteur (Z) à partir d'une face supérieure (O) opposée à la surface de base (F).

2. Système de corps d'essai selon la revendication 1, comprenant en outre au moins un élément d'écartement (D), afin de pouvoir composer un train (Z) à partir de plusieurs éléments (A, D) disposés les uns derrière les autres et/ou les uns à côté des autres et accouplés les uns aux autres dans une longueur totale et/ou une largeur totale pouvant être prédéfinies, dans lequel les éléments d'écartement (D) du système de corps d'essai ne sont pas prévus pour recevoir des poids d'essai.

3. Système de corps d'essai selon la revendication 1 ou 2, **caractérisé en ce que** les moyens d'accouplement (K) des éléments de réception (A) sont conçus de la même manière que les moyens d'accouplement (K) des éléments d'écartement (D), afin d'accoupler directement l'un à l'autre, au choix, deux éléments d'écartement (D) ou deux éléments de réception (A) ou un élément de réception (A) et un élément d'écartement (D) d'un train (T).

4. Système de corps d'essai selon l'une des revendications précédentes, **caractérisé en ce que** le corps de base (R) des éléments de réception (A) présente une face supérieure (O) opposée à la surface de base (F), dans lequel les cavités (U) s'étendent dans le corps de base (R) perpendiculairement à la face supérieure (O) et/ou le long de la direction de la hauteur (Z).

5. Système de corps d'essai selon l'une des revendications précédentes, **caractérisé en ce que** la hauteur ($H_A$, $H_D$) des éléments de réception (A) et/ou des éléments d'écartement (D) est faible par rapport à la longueur ($L_A$, $L_D$) et/ou à la largeur ($B_A$, $B_D$), de sorte que les éléments (A, D) forment un corps de préférence plat, dans lequel de préférence ce qui suit s'applique

a) ($L_A$, $L_D$) > ($H_A$, $H_D$) et/ou ($B_A$, $B_D$) > ($H_A$, $H_D$), de préférence ($L_A$, $L_D$) > 5·($H_A$, $H_D$) et/ou ($B_A$, $B_D$) > 3·($H_A$, $H_D$) et/ou

b)

$$H_A = H_D$$

et/ou

c)

$$B_A = B_D.$$

6. Système de corps d'essai selon l'une des revendications précédentes, **caractérisé en ce que** l'au moins un élément d'écartement (D) présente un corps d'élément d'écartement qui, pour réduire le poids, est conçu sous forme de nid d'abeille ou de treillis et/ou présente au moins un évidement qui traverse partiellement ou complètement le corps d'élément d'écartement dans la direction Z.

7. Système de corps d'essai selon l'une des revendications précédentes, **caractérisé en ce que** deux éléments (A, D) d'un train (T) accouplés directement l'un à l'autre dans la direction X se recouvrent partiellement dans la direction Y.

8. Système de corps d'essai selon l'une des revendications précédentes, **caractérisé en ce qu'**un élément (A, D) présente une section transversale externe X-Y

a) ayant la forme d'un polygone régulier ou irrégulier comportant une largeur ($B_A$, $B_D$) et une longueur ($L_A$, $L_D$), et/ou

b) ayant une section au moins partiellement arrondie qui s'étend sur la largeur ($B_A$, $B_D$) et présente la forme d'un fond torosphérique ou d'un arc de cercle, en particulier d'un quart de cercle ou d'un demi-cercle.

9. Système de corps d'essai selon l'une des revendications précédentes, **caractérisé en ce que** les moyens d'accouplement (K) accouplant respectivement deux éléments l'un à l'autre sont conçus pour transmettre des forces de traction et/ou de poussée et/ou de compression entre les deux éléments, dans lequel les moyens d'accouplement sont élastiques pour, tout en conservant l'accouplement,

a) permettre un basculement souple en flexion des éléments (A, D) accouplés l'un à l'autre l'un par rapport à l'autre dans des limites de tolérances pouvant être prédéfinies, en particulier autour d'un axe de basculement s'étendant dans la direction longitudinale (X) ou la direction transversale (Y) ou la direction de la hauteur (Z) et/ou

b) permettre un mouvement de translation des deux éléments l'un par rapport à l'autre, et/ou

c) amortir et/ou atténuer la transmission de chocs entre les deux éléments.

10. Système de corps d'essai selon l'une des revendications précédentes, **caractérisé en ce que** deux éléments (A, D) accouplés directement l'un à l'autre forment entre eux un écartement, en particulier une fente, afin d'éviter en grande partie ou complètement un contact direct des deux éléments (A, D), même lors de leurs mouvements relatifs l'un par rapport à l'autre.

11. Système de corps d'essai selon l'une des revendications précédentes, **caractérisé en ce que** des éléments (A, D) de longueurs ($L_A$, $L_D$) ou de largeurs ($B_A$, $B_D$) différentes sont prévus, dans lequel les longueurs ou les largeurs sont conçues selon une dimension modulaire pour laquelle la longueur ($L_A$, $L_D$) ou la largeur ($B_A$, $B_D$) d'un élément (A, D) est formée par un multiple, de préférence entier, d'une longueur de base ou d'une largeur de base, et dans lequel un élément (A, D) le plus court ou le plus étroit peut présenter la longueur de base ou la largeur de base ou un multiple de la longueur de base ou de la largeur de base.

12. Système de corps d'essai selon l'une des revendications précédentes, comprenant en outre des moyens d'identification lisibles par machine pour pouvoir reconnaître, à l'intérieur d'un train (T), pour au moins un élément (A, D),

a) une identification d'élément prévue sur l'élément (A, D), et/ou

b) sa position à l'intérieur du train (T) par rapport à au moins un autre élément (A, D), et/ou

c) sa dimension dans la direction longitudinale (X) et/ou dans la direction transversale (Y) et/ou dans la direction de la hauteur et/ou son poids à vide et/ou

d) l'équipement de poids d'essai selon le type et la position des poids d'essai à l'intérieur de l'élément de réception (A) et/ou

e) son poids total et/ou sa répartition de poids dans la direction longitudinale (X) et/ou la direction transversale (Y)

manuellement ou automatiquement.

13. Train (T), formé par un agencement d'au moins deux éléments (A, D) d'un système de corps d'essai selon l'une des revendications précédentes, comportant au moins un élément de réception (A) qui est accouplé, dans la direction X et/ou dans la direction Y, à un autre élément (A, D) directement adjacent.

14. Procédé permettant l'essai de systèmes de mesure en utilisant un système de corps d'essai selon l'une des revendications précédentes, comprenant les étapes suivantes :

a) formation d'un train (T) comportant au moins deux éléments (A, D) accouplés l'un à l'autre, situés l'un derrière l'autre dans la direction X et/ou situés l'un à côté de l'autre dans la direction Y, parmi lesquels au moins un élément est un élément de réception (A) ;

b) équipement d'un nombre (n) de cavités (U) des éléments de réception (A) de poids d'essai (G) pour former une charge d'essai totale du train (T), dans lequel n ≥ 0 ;

c) déplacement du train dans la direction X à travers le système de mesure ou le long de celui-ci

d) saisie et évaluation de valeurs de mesure, lesquelles sont saisies par le système de mesure en relation avec au moins une grandeur physique du train, en particulier son poids total et/ou sa répartition de poids.

15. Procédé selon la revendication précédente, **caractérisé en ce que**, au moyen de l'équipement des cavités (U), une répartition de poids pouvant être prédéfinie est reproduite le long de la longueur totale ($L_T$) et/ou de la largeur totale ($B_T$) du train (T).

Figur 1

EP 4 078 112 B1

Figur 2

Figur 3

EP 4 078 112 B1

Figur 4

EP 4 078 112 B1

Figur 5

Figur 6

A

Y
X

$E_1$          $E_2$

M

K

V     N                    V

$A_1$                          K

$A_2$

G

Figur 7b

Figur 7a

EP 4 078 112 B1

Figur 8

Figur 8a

Figur 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008012406 U1
- GB 780321 A
- DE 19631709 A1